(19) Europäisches Patentamt / European Patent Office / Office européen des brevets

(11) **EP 4 723 491 A1**

(12) **EUROPEAN PATENT APPLICATION**
published in accordance with Art. 153(4) EPC

(43) Date of publication:
08.04.2026 Bulletin 2026/15

(21) Application number: 24838618.7

(22) Date of filing: 28.06.2024

(51) International Patent Classification (IPC):
*H04B 1/7163* (2011.01)

(52) Cooperative Patent Classification (CPC):
H04B 1/7163; H04B 7/06

(86) International application number:
PCT/CN2024/102474

(87) International publication number:
WO 2025/011363 (16.01.2025 Gazette 2025/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.07.2023 CN 202310842664

(71) Applicant: Huawei Technologies Co., Ltd.
Shenzhen, Guangdong 518129 (CN)

(72) Inventors:
• LIU, Chenchen
  Shenzhen, Guangdong 518129 (CN)
• QIAN, Bin
  Shenzhen, Guangdong 518129 (CN)
• HUANG, Lei
  Shenzhen, Guangdong 518129 (CN)
• YANG, Xun
  Shenzhen, Guangdong 518129 (CN)

(74) Representative: Huawei European IPR
Huawei Technologies Duesseldorf GmbH
Riesstraße 25
80992 München (DE)

(54) **COMMUNICATION METHOD AND APPARATUS**

(57) A communication method and apparatus are applied to a wireless local area network system that supports IEEE 802.11ax (Wi-Fi 6)/802.1 1be (Wi-Fi 7)/802.11bn (Wi-Fi 68)/Wi-Fi AI/millimeter wave/ultra-wideband UWB, or sensing, to reduce overheads of a sensing receiver feeding back a CIR tap based on a predefined feedback pattern. A sensing transmitter may send first information including a first parameter and a second parameter. The first parameter is of a first value, the first parameter indicates that the sensing receiver feeds back a CIR tap based on the predefined feedback pattern, and the second parameter indicates a quantity of CIR taps that need to be fed back in each CIR group, or the second parameter indicates a length of a first bitmap, where the length of the first bitmap and a quantity of taps of a gap between two CIR groups of the predefined feedback pattern are used to determine a quantity of CIR taps that need to be fed back in each CIR group.

FIG. 4

**Description**

<u>CROSS-REFERENCE TO RELATED APPLICATIONS</u>

This application claims priority to Chinese Patent Application No. 202310842664.1, filed with the China National Intellectual Property Administration on July 10, 2023 and entitled "COMMUNICATION METHOD AND APPARATUS", which is incorporated herein by reference in its entirety.

<u>TECHNICAL FIELD</u>

This application relates to the field of mobile communication technologies, and in particular, to a communication method and apparatus.

<u>BACKGROUND</u>

An ultra-wideband (ultra-wideband, UWB) technology is a wireless carrier communication technology in which a nanosecond-level non-sinusoidal narrow impulse is used for data transmission. Therefore, the ultra-wideband occupies a wide spectrum range. Due to a narrow impulse and extremely low radiation spectral density of the ultra-wideband, a UWB system has advantages such as a strong multi-path resolution capability, low power consumption, and high confidentiality. The UWB technology can be applied to various communication scenarios.

In an application of a sensing (sensing) scenario, information like a distance, an angle, and a speed of a target may be extracted by detecting an echo of a UWB signal on the target, to implement target sensing. When a sensing receiver is a receive device of the UWB signal, the sensing receiver needs to transmit a measurement result of a channel impulse response (channel impulse response, CIR) to a sensing transmitter through an air interface, to feed back a sensing result. The sensing receiver may feed back the CIR based on a configuration of a CIR report.

Currently, when the sensing receiver feeds back a CIR tap based on a predefined feedback pattern (feedback pattern), configuration overheads of the CIR report are excessively high, and there is a resource waste.

<u>SUMMARY</u>

This application provides a communication method and apparatus, to reduce configuration overheads of a sensing receiver feeding back a CIR tap based on a predefined feedback pattern.

According to a first aspect, a communication method is provided. The method may be implemented by a first communication apparatus. The first communication apparatus may be a sensing transmitter or a component of the sensing transmitter. The sensing transmitter may be a network device or a terminal device. The component in this application may include, for example, at least one of a chip, a chip system, a processor, a transceiver, a processing unit, or a transceiver unit. For example, the method is executed by the sensing transmitter. The method may be implemented by using the following steps: The sensing transmitter may send first information. The first information includes a first parameter and a second parameter, and the first parameter indicates a CIR feedback scheme. When the first parameter is of a first value, the first parameter indicates that a sensing receiver feeds back a CIR tap based on a predefined feedback pattern, and the second parameter indicates a quantity of CIR taps that need to be fed back in each CIR group of the predefined feedback pattern, or the second parameter indicates a length of a first bitmap, where the length of the first bitmap and a quantity of CIR taps of a gap between two CIR groups of the predefined feedback pattern are used to determine a quantity of CIR taps that need to be fed back in each CIR group.

According to the first aspect, the sensing transmitter may indicate, based on the first information, the CIR tap that needs to be fed back. Correspondingly, the sensing receiver may determine, based on the first information, the CIR tap that needs to be fed back. When the first parameter is of the first value, the second parameter is used to determine the quantity of CIR taps that need to be fed back in each CIR group of the predefined feedback pattern. Therefore, the CIR tap that needs to be fed back in the CIR group may be determined based on the quantity of CIR taps that need to be fed back in each CIR group, without indicating whether each CIR tap needs to be fed back. Therefore, configuration overheads for feeding back the CIR tap can be reduced.

According to a second aspect, a communication method is provided. The method may be implemented by a second communication apparatus. The second communication apparatus may be a sensing receiver or a component of the sensing transmitter. The sensing receiver is also referred to as a transmit end, and may be a terminal device or a network device. The component in this application may include, for example, at least one of a chip, a chip system, a processor, a transceiver, a processing unit, or a transceiver unit. For example, the method is executed by the sensing receiver. The method may be implemented by using the following steps: The sensing receiver may receive first information. The first information includes a first parameter and a second parameter, and the first parameter indicates a channel impulse response CIR feedback scheme. When the first parameter is of a first value, the first parameter indicates that the sensing receiver feeds back a CIR tap based on a predefined feedback pattern, and the second parameter indicates a quantity of CIR taps that need to be fed back in each CIR group of the predefined feedback pattern, or the second parameter indicates a length of a first bitmap, where the length of the first bitmap and a quantity of CIR taps of a gap between two CIR groups of the predefined feedback pattern are used to determine a quantity of CIR taps that need to be fed back in each CIR group.

For beneficial effect of the method in the second aspect, refer to descriptions of beneficial effect of the method in the first aspect. Details are not repeated.

In any one of possible implementations of the first aspect and the second aspect, when the first parameter is of a second value, the first parameter indicates that the sensing receiver determines, based on a second bitmap, a CIR tap that needs to be fed back, and the second parameter indicates a length of the second bitmap. Therefore, a reuse indication of the CIR tap that needs to be fed back in the CIR group may be implemented by using a bitmap length field in a CIR report parameters config field. Therefore, when the sensing receiver feeds back the CIR tap based on the predefined feedback pattern, no new field needs to be added to indicate the quantity of CIR taps that need to be fed back in the CIR group. This can further reduce configuration overheads.

In any one of possible implementations of the first aspect and the second aspect, when a value of the first parameter is the first value, the first information further includes a third parameter, and the third parameter indicates the quantity of CIR taps of the gap between the two CIR groups of the predefined feedback pattern.

In any one of possible implementations of the first aspect and the second aspect, a CIR tap at a start location of a $1^{st}$ CIR group in the two CIR groups is variable. In this way, configuration or indication flexibility of the CIR tap that needs to be fed back can be improved.

In any one of possible implementations of the first aspect and the second aspect, when the value of the first parameter is the first value, a combination of the second parameter and the third parameter indicates an index of a specified predefined feedback pattern in the predefined feedback patterns. Based on this implementation, the combination of the second parameter and the third parameter may be used as the index of the specified predefined feedback pattern. In this way, the CIR tap is fed back based on the specified predefined feedback pattern, thereby improving efficiency of feeding back the CIR.

In any one of possible implementations of the first aspect and the second aspect, a value of the second parameter is 0, a value of the third parameter is an integer greater than or equal to 0 and less than or equal to 28, and the quantity of CIR taps that need to be fed back in each CIR group is 16.

In any one of possible implementations of the first aspect and the second aspect, an index of the CIR tap at the start location of the $1^{st}$ CIR group in the two CIR groups is one of 1 to 224.

In any one of possible implementations of the first aspect and the second aspect, the value of the second parameter is 1, the value of the third parameter is an integer greater than or equal to 0 and less than or equal to 24, and the quantity of CIR taps that need to be fed back in each CIR group is 32.

In any one of possible implementations of the first aspect and the second aspect, the index of the CIR tap at the start location of the $1^{st}$ CIR group in the two CIR groups is one of 1 to 192.

In any one of possible implementations of the first aspect and the second aspect, the value of the second parameter is 2, the value of the third parameter is an integer greater than or equal to 0 and less than or equal to 16, and the quantity of CIR taps that need to be fed back in each CIR group is 64.

In any one of possible implementations of the first aspect and the second aspect, the index of the CIR tap at the start location of the $1^{st}$ CIR group in the two CIR groups is one of 1 to 128.

In any one of possible implementations of the first aspect and the second aspect, the value of the second parameter is 3, the value of the third parameter is 0, and the quantity of CIR taps that need to be fed back in each CIR group is 128.

In any one of possible implementations of the first aspect and the second aspect, the index of the CIR tap at the start location of the $1^{st}$ CIR group in the two CIR groups is 1.

According to the foregoing possible implementations, the sensing receiver and/or the sensing transmitter may determine, based on the CIR tap at the start location of the $1^{st}$ CIR group, the gap, and the quantity of CIR taps that need to be fed back in each CIR group, the CIR tap that needs to be fed back. This can further reduce indication overheads or the configuration overheads.

According to a third aspect, a communication apparatus is provided. The apparatus may implement the method according to any possible design of the first aspect or the second aspect. The apparatus has a function of the first communication apparatus or the second communication apparatus. The apparatus is, for example, a sensing receiver or a function module of the sensing receiver, or a sensing transmitter or a function module of the sensing transmitter.

In an optional implementation, the apparatus may include modules that perform and that are in one-to-one correspondence with the method/operations/steps/actions described in the first aspect or the second aspect. The module may be a hardware circuit, or may be software, or may be implemented by a hardware circuit in combination with software.

In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general term for these functional modules.

For example, when the apparatus is configured to perform the method described in the first aspect or the second aspect, the apparatus may include the communication unit and the processing unit.

According to a fourth aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to the first aspect, the second aspect, or the possible implementations of the first aspect and the second aspect.

In a possible implementation, the processor and the memory are integrated together.

In another possible implementation, the memory is located outside the communication apparatus.

The communication apparatus further includes a communication interface. The communication interface is used for communication between the communication apparatus and another device, for example, used for data and/or signal sending or receiving. For example, the communication interface may be a transceiver, a circuit, a bus, a module, or another type of communication interface.

According to a fifth aspect, a computer-readable storage medium is provided. The computer-readable storage medium is configured to store a computer program or instructions, and when the computer program or the instructions are run, the method shown in any one of the first aspect, the second aspect, or the possible implementations of the first aspect and the second aspect is implemented.

According to a sixth aspect, a computer program product including instructions is provided. When the computer program product runs on a computer, the method shown in any one of the first aspect, the second aspect, or the possible implementations of the first aspect and the second aspect is implemented.

According to a seventh aspect, an embodiment of this application further provides a communication apparatus, configured to perform the method according to the first aspect, the second aspect, or various possible implementations of the first aspect and the second aspect.

According to an eighth aspect, a chip system is provided. The chip system includes a logic circuit (which may alternatively be understood as that the chip system includes a processor, and the processor may include a logic circuit and the like), and may further include an input/output interface. The input/output interface may be configured to input a message, or may be configured to output a message. The input/output interface may be a same interface, to be specific, a same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the sending and receiving functions in the method shown in any one of the first aspect, the second aspect, or the possible implementations of the first aspect and the second aspect. The logic circuit may be further configured to transmit a message to the input/output interface, or receive, from the input/output interface, a message from another communication apparatus. The chip system may be configured to implement the method according to any one of the first aspect, the second aspect, or the possible implementations of the first aspect and the second aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to a ninth aspect, a communication system is provided. The communication system may include a first communication apparatus and/or a second communication apparatus, which are respectively configured to perform the method shown in any one of the first aspect or the possible implementations of the first aspect, and the method shown in any one of the second aspect or the possible implementations of the second aspect.

For technical effect brought by the third aspect to the ninth aspect, refer to descriptions in the first aspect and the possible implementations of the first aspect. Details are not described herein again.

BRIEF DESCRIPTION OF DRAWINGS

FIG. 1 is a diagram of a structure of a star topology according to an embodiment of this application;

FIG. 2 is a diagram of a structure of a point-to-point topology according to an embodiment of this application;

FIG. 3 is a diagram of a CIR window according to an embodiment of this application;

FIG. 4 is a schematic flowchart of a communication method according to an embodiment of this application;

FIG. 5 is a diagram of a structure of a communication apparatus according to an embodiment of this application;

FIG. 6 is a diagram of a structure of another communication apparatus according to an embodiment of this application; and

FIG. 7 is a diagram of a structure of another communication apparatus according to an embodiment of this application.

## DESCRIPTION OF EMBODIMENTS

Embodiments of this application provide a communication method and apparatus. The method and the apparatus are based on a same inventive concept. Because problem-resolving principles for the method and the apparatus are similar, for implementations of the apparatus and the method, refer to each other, and no repeated description is provided.

In the description of this application, words such as "first" and "second" are merely used for distinguishing between descriptions, and cannot be understood as an indication or implication of relative importance, or cannot be understood as an indication of implication of an order. It should be noted that a sequence of "first", "second", and the like is not limited in this application. For example, "second" may appear first, and then "first" appears. This is not limited in this application.

In the description of this application, "at least one (type)" means one or more (types), and "a plurality of (types)" means two or more (types). "At least one of the following" or a similar expression thereof means any combination of these items, including any combination of a single item or a plurality of items. For example, at least one of a, b, or c may indicate a, b, c, a and b, a and c, b and c, or a, b, and c, where a, b, and c may be singular or plural. In the descriptions of this application, "/" represents "or". For example, a/b represents a or b.

The technical solutions provided in this application are applicable to a UWB-based wireless personal area network (wireless personal area network, WPAN). For example, a method provided in this application is applicable to institute of electrical and electronics engineers (institute of electrical and electronics engineers, IEEE) 802.15 series protocols, for example, the 802.15.4a protocol, the 802.15.4z protocol, the 802.15.4ab protocol, or a future generation of UWB WPAN standard. Examples are not enumerated herein. The method provided in this application may be further applied to various communication systems, for example, an internet of things (internet of things, IoT) system, vehicle to everything (vehicle to everything, V2X), or a narrowband internet of things (narrowband internet of things, NB-IoT) system, and is applied to a device in the vehicle to everything, an internet of things node, a sensor, or the like in the internet of things, a smart camera, a smart remote control, and a smart water meter or electricity meter in smart home, and a sensor in a smart city. The method provided in this application is also applicable to an LTE frequency division duplex (frequency division duplex, FDD) system, an LTE time division duplex (time division duplex, TDD) system, a worldwide interoperability for microwave access (worldwide interoperability for microwave access, WiMAX) communication system, a long term evolution (long term evolution, LTE) system, a 5th generation (5th generation, 5G) communication system, a 6th generation (6th generation, 6G) communication system, or the like. In addition, this application may be applied to a wireless local area network system that supports IEEE 802.11ax (mobile hotspot (Wi-Fi 6)/802.11be (Wi-Fi 7)/802.1 1bn (Wi-Fi 68)/Wi-Fi (artificial intelligence, AI)/millimeter wave/UWB, or sensing.

The following first explains some terms in embodiments of this application.

(1) Sensing may also be referred to as sensing measurement or radio sensing, means that a transmitter and a receiver transmit a signal to implement an objective of discovering a target or determining a target status. UWB sensing means that a station (station, STA) with a UWB signal sensing capability uses a received UWB signal to detect a feature of an expected target in a given environment. For example, the feature includes one or more of a range, a speed, an angle, a motion, existence or proximity, a gesture, and the like. The target includes one or more of an object, a person, an animal, and the like. The environment includes one or more of a room, a house, a vehicle, an enterprise, and the like.

For example, the transmitter may send the UWB signal used for sensing measurement to the receiver, and the receiver may measure the signal to obtain a channel estimation result, for example, a channel impulse response (channel impulse response, CIR). The receiver may perform sensing based on the CIR. Alternatively, the receiver may send the channel estimation result to the transmitter, and the transmitter performs target sensing or target status sensing based on the channel estimation result. For example, the receiver or the transmitter may process the CIR, to determine whether a moving object exists in the environment.

During specific implementation, sensing signals may be sent one by one in a form of a data packet, and therefore, may also be referred to as a sensing packet (sensing packet, SP).

In some embodiments, sensing signals sent in a period of time on a frequency band may be referred to as a sensing fragment (sensing fragment, SF), and each sensing fragment may have one or more sensing packets. It may be understood that, when a quantity of sensing packets in the sensing fragment is determined, the sensing packets may alternatively be replaced with the sensing fragment.

In a sensing process, devices participating in sensing include a sensing initiator, a sensing responder, a sensing transmitter, and a sensing receiver.

(2) The sensing initiator (sensing initiator) is also referred to as a sensing initiator device or an initiator, and is a device that initiates a sensing procedure.

(3) The sensing responder (sensing responder) is also referred to as a sensing responder device, a responder device, a responder, or a response device, and is a device that responds to sensing initiated by the sensing initiator and participates in sensing.

(4) The sensing transmitter (sensing transmitter) is also referred to as a transmitting end, and is a device that sends the sensing signal. The sensing signal may be a signal used for sensing measurement.

(5) The sensing receiver (sensing receiver) is also referred to as a receiving end, and is a device that receives the sensing signal. The sensing receiver may measure the sensing signal.

During specific implementation, the sensing initiator may serve as the transmitter, and the sensing responder may serve as the receiver. Alternatively, the sensing initiator may serve as the receiver, and the sensing responder may serve as the transmitter.

The sensing initiator may be a network device or a terminal device, and the sensing responder may be a network device or a terminal device. The network device may include an access network device, a core network (core network, CN) device, and the like. The terminal is connected to a radio access network device in a wireless manner, and the radio access network device is connected to the core network in a wireless or wired manner. The core network device and the radio access network device may be different independent physical devices, functions of the core network device and logical functions of the radio access network device may be integrated into a same physical device, or some functions of the core network device and some functions of the radio access network device may be integrated into one physical device. A wired or wireless manner may be used for connection between terminals and between radio access network devices.

For example, the access network device is an access device used by the terminal to access a communication system in a wireless manner. For example, the radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, a long range radio (long range radio, LoRa) system, or a vehicle-to-everything system, or the like. The radio access network device may alternatively be a module or a unit that completes a part of functions of the base station, for example, may be a central unit (central unit, CU), or may be a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station, may be a micro base station or an indoor base station, or may be a relay node, a donor node, or the like. A specific technology and a specific device form that are used by the radio access network device are not limited in embodiments of this application. For ease of description, a network device is used as an abbreviation of the radio access network device, and the base station is used as an example of the radio access network device.

The terminal device is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), V2X communication, machine type communication (machine type communication, MTC), internet of things, virtual reality, augmented reality, industrial control, autonomous driving, telemedicine, smart grid, smart furniture, smart office, smart wearable, smart transportation, and smart city. The terminal may be a mobile phone, a tablet computer, a computer with a wireless sending and receiving function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

(6) The frequency band may refer to a frequency domain range. For example, in a UWB system, a bandwidth of 499.2 MHz may be referred to as a frequency band.

(7) A time unit is a time range determined by duration, for example, a frame, a subframe, a sensing slot, a sensing round, a sensing block, or a symbol. This is not limited in this application. For example, one slot may be duration of 9 microseconds.

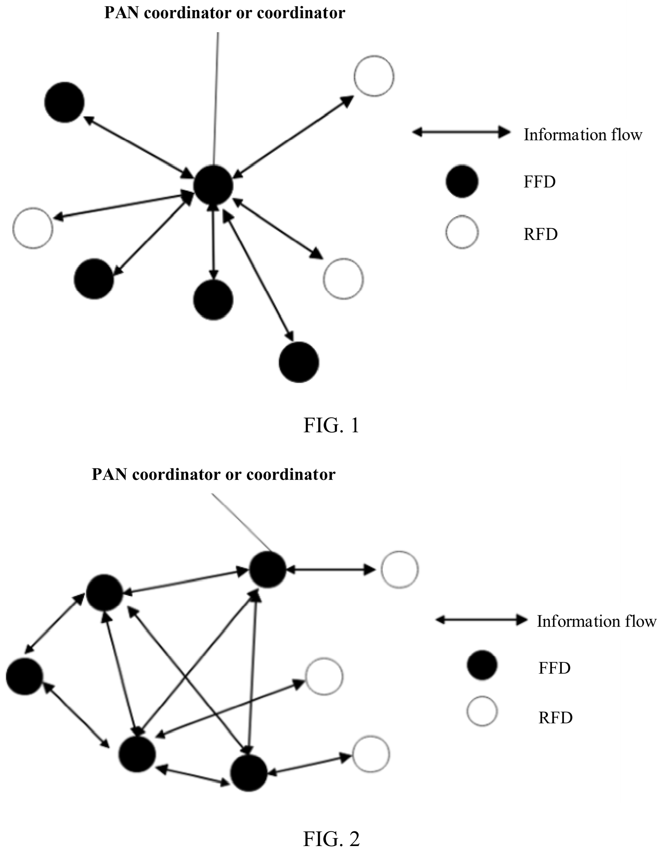

The technical solutions provided in embodiments of this application may operate in a star topology, a point-to-point topology, or a mesh topology. FIG. 1 is a diagram of a star topology according to an embodiment of this application. As shown in FIG. 1, in the star topology, a central node may control data communication between one or more other devices.

It may be understood that a point-to-point topology may be considered as a special mesh topology. The point-to-point topology refers to a structure of data communication between two devices. As shown in FIG. 2, in a mesh topology, data communication may be performed between any two devices.

Optionally, in FIG. 1 or FIG. 2, a black node is a full-function device (full-function device, FFD), and a white node is a reduced-function device (reduced-function device, RFD). In a UWB system, the FFD may be an anchor device, or a label device having a strong computing capability, for example, a UWB label mounted on a smartphone. The RFD is a label device and has only a part of the computing capability. In a possible implementation, the FFD device may serve as a personal area network (personal area network, PAN) coordinator or a coordinator, but the RFD cannot serve as the PAN coordinator or the coordinator.

UWB is a wireless carrier communication technology in which nanosecond-level narrow impulses are used for data transmission. The narrow impulses occupy a wide spectral range and have extremely low radiation spectrum density. A UWB system has advantages such as high multi-path resolution, low power consumption, and high confidentiality. As the UWB technology is applied in the civil field, ultra-wideband wireless communication has become one of popular physical layer technologies for short-range and high-speed wireless networks.

Currently, the IEEE association has incorporated the UWB into the IEEE 802 series wireless standards of the IEEE association, and the UWB-based WPAN standard IEEE 802.15.4a and its evolution version IEEE 802.15.4z have been released. In three features of communication, ranging, and sensing, the UWB focuses more on ranging and sensing capabilities, and can use a single waveform to implement ranging while performing sensing.

When the UWB technology is applied to a sensing technology, and when a sensing receiver is a receive device of a UWB signal, the sensing receiver needs to transmit a measurement result of a CIR to a sensing transmitter through an air interface, to feedback a sensing result. In a CIR window-based (or referred to as feedback window-based) CIR feedback mechanism, the sensing receiver may send, to the sensing transmitter based on an indication of a CIR tap that needs to be fed back, the CIR tap that is of a CIR window and that needs to be fed back, to feedback the sensing result. Each CIR tap may indicate a sensing result of a specific time granularity in the CIR window. The indication may indicate the CIR tap that needs to be fed back. Therefore, the sensing receiver may send only the CIR tap that needs to be fed back, and does not need to send a CIR tap other than the CIR tap that needs to be fed back, to reduce overheads. It may be understood that, a time domain granularity of each CIR tap is, for example, 1 nanosecond (ns). The CIR window may include a maximum of 32, 64, 128, or 256 CIR taps. In other words, a length of the CIR window may be 32 ns, 64 ns, 128 ns, or 256 ns. In this application, the CIR tap may also be referred to as a tap for short.

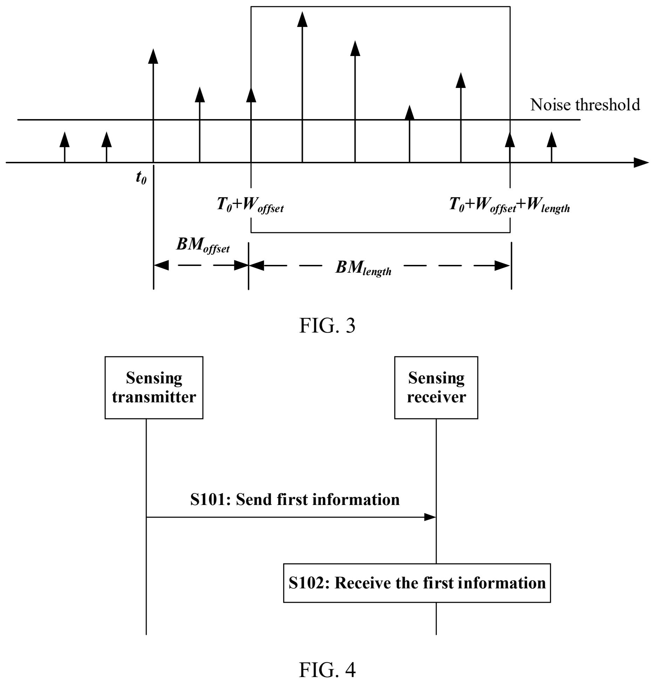

As shown in FIG. 3, $t_0$ represents a reference point, namely, an earliest detected tap (earliest detected tap). The sensing transmitter may indicate a location of the CIR window through $BM_{offser}$ and $BM_{length}$. $BM_{offset}$ represents a gap between a start location of the CIR window and $t_0$. For example, $BM_{offset}$ may indicate a quantity $W_{offset}$ of CIR taps between the start location of the CIR window and $t_0$, and the start location of the CIR window may be denoted as $(t_0 + W_{offset})$. $BM_{length}$ represents a length of the CIR window, for example, indicates a quantity $W_{length}$ of CIR taps between an end location of the CIR window and the start location of the CIR window. Therefore, it may be said that a location of the CIR window starts from $(t_0 + W_{offset})$, and ends at $(t_0 + W_{offset} + W_{length})$. $W_{offset}$ is the quantity of CIR taps indicated by $BM_{offset}$, and $W_{length}$ is the quantity of CIR taps indicated by $BM_{length}$. In this application, "quantity" may also be replaced with "number".

Currently, $BM_{offset}$ and $BM_{length}$ are indicated by the sensing transmitter through CIR report parameters config (CIR report parameters config). CIR report parameters config may be carried in an application control (AC) information element (information element, IE). Optionally, as shown in Table 1, information or a parameter carried in the application control information element may carry one or more of the following parameters, information, or fields:

Table 1

| Bit (bit) index | 0 | 1 | 2 | Variable (variable) | Variable | Variable |
|---|---|---|---|---|---|---|
| Information name | Common sensing control present (common sensing control present) | CIR report parameters present (CIR report parameters present) | Frequency stitching parameters present (frequency stitching parameters present) | Common sensing control config (common sensing control config) | CIR report parameters config | Frequency stitching parameters config (frequency stitching parameters config) |

The common sensing control present information may indicate whether common sensing control config is present. The CIR report parameters present information may indicate whether CIR report parameters config is present. The frequency stitching parameters present information may indicate whether frequency stitching parameters config is present.

In addition, as shown in Table 2, common sensing control config may include one or more of the following parameters, information, or fields:

Table 2

| Bit index | 0 and 1 | 2 | 3 and 4 | 5 to 7 |
|---|---|---|---|---|
| Field name | Sensing mode (sensing mode) | Responder role (responder role) | Sensing packet format (sensing packet format) | Reserved (reserved) |

In addition, as shown in Table 3, CIR report parameters config may include one or more of the following parameters, information, or fields:

Table 3

| Bit index | 0 and 1 | 2 and 3 | 4 and 5 | 6 | 7 | 8 | 9 to 18 | 19 and 20 | 21 to 25 | 5 to 64 octets (octets) |
|---|---|---|---|---|---|---|---|---|---|---|
| Field name | CIR in-phase and quadrature (in-phase and quadrature, I/Q) number of bits (CIR I/Q number of bits) | Bitmap length (bitmap length) | Bitmap mode (bitmap mode) | Process CIR report for range (proces s CIR report for range) | Process CIR report for velocity (process CIR report for velocity) | Process CIR report for azimuth angle of arrival (azimuth angle of arrival, AOA) measurement (process CIR report for AOA measurement) | Bitmap sub-window length (bitmap sub-window length) | Bitmap offset (bitmap offset) | Bitmap gap (bitmap gap) | Bitmap (bitmap) |

A value of the bitmap length in Table 3 is $BM_{length}$, and a value of the bitmap offset is $BM_{offset}$.

Based on Table 3, when a value of the bitmap mode is 1, that is, bitmap mode=1, it indicates that the CIR tap that needs to be fed back is determined based on a bitmap carried in a bitmap field. When the value of the bitmap mode is 1, the bitmap length field may indicate the length of the CIR window. For example, the CIR window includes 256 CIR taps, and the bitmap carries information whose length is 256 bits. Each bit corresponds to one CIR tap, and may indicate whether the CIR tap needs to be fed back. When a value of any bit is 1 (or may be 0), it represents that a corresponding CIR tap needs to be fed back. Correspondingly, the sensing receiver sends, to the sensing transmitter, the CIR tap that needs to be fed back.

In other words, when the value of the bitmap mode is 1, CIR report parameters config needs to carry the bitmap field. In addition, when the value of the bitmap mode is 1, the length of the CIR window needs to be indicated by using the bitmap length field in CIR report parameters config.

In addition, when the value of the bitmap mode in Table 3 is 0, that is, bitmap mode=0, it indicates that a CIR feedback solution is that the sensing receiver feeds back the CIR tap based on a predefined feedback pattern (feedback pattern), or that a CIR feedback solution is that the sensing receiver determines, based on a predefined feedback pattern, the CIR tap that needs to be fed back. The feedback pattern may also be referred to as a feedback template, a CIR pattern, or a CIR feedback pattern. Each feedback pattern may indicate one or more groups of CIR taps or CIR groups that need to be fed back, for example, a correspondence between an index of each CIR pattern, and a CIR tap at a start location and a CIR tap at an end location (end tap) of a CIR group. For ease of description, the CIR tap at the start location of the CIR group may be referred to as a start tap (start tap), and the CIR tap at the end location of the CIR group may be referred to as the end tap (end tap).

Optionally, a plurality of feedback patterns may be predefined for the sensing transmitter and/or the sensing receiver, or the sensing transmitter and/or the sensing receiver may obtain a plurality of predefined feedback patterns. Therefore, the feedback pattern may also be referred to as the predefined feedback pattern. When feeding back the CIR tap, the sensing receiver may perform feedback based on a specified feedback pattern in the predefined feedback patterns, in other words, send the CIR tap to the sensing transmitter based on the specified feedback pattern. The feedback pattern may be predefined, or may be indicated by the sensing transmitter and the sensing receiver through signaling interaction.

For example, when the value of the bitmap mode in Table 3 is 0, an index of the feedback pattern may be indicated by using an additional field. In this way, the specified feedback pattern is indicated in the plurality of predefined feedback patterns. Therefore, the sensing receiver can determine, based on the specified feedback pattern, the CIR tap that needs to be fed back.

In addition, for another example, when the value of the bitmap mode in Table 3 is 0, CIR report parameters config may carry the bitmap sub-window length field that indicates a length of each CIR group, to determine, based on the length of each CIR group, the specified feedback pattern to feed back the CIR.

However, in current CIR report parameters config, there is no existing field that can indicate the index of the feedback pattern or indicate the length of each CIR group when the value of the bitmap mode is 0. If the index needs to be indicated, a new field may need to be added, resulting in an increase both in configuration overheads and in complexity of processing configuration information.

To reduce configuration overheads of a CIR report, an embodiment of this application provides a communication method. The communication method may be performed by a first communication apparatus and a second communication apparatus. The first communication apparatus may be a sensing receiver or a component of the sensing receiver, and the second communication apparatus may be a sensing transmitter or a component of the sensing transmitter. The component in this application may include, for example, at least one of a chip, a chip system, a processor, a transceiver, a processing unit, or a transceiver unit. It may be understood that the sensing transmitter may be a network device or a terminal device, and the sensing receiver may be a network device or a terminal device.

As shown in FIG. 4, for example, the communication method is performed by the sensing transmitter and the sensing receiver. The communication method provided in embodiments of this application may include step S101 and step S102 in the following.

S101: The sensing transmitter sends first information.

S102: The sensing receiver receives the first information.

The first information may include or indicate a CIR-related configuration. For example, the first information is CIR report parameters config, or may be an application control information element in which CIR report parameters config is located.

In this application, the first information may include a first parameter and a second parameter. In an optional implementation, the first information may further include a third parameter.

The following separately describes the first parameter, the second parameter, and the third parameter.

(1) First parameter

The first parameter may also be referred to as a first field. The first parameter may indicate a CIR feedback scheme. The CIR feedback scheme is one of a feedback scheme in which the sensing receiver feeds back a CIR tap based on a predefined feedback pattern (or the sensing receiver determines, based on a predefined feedback pattern, a CIR tap that needs to be fed back), a feedback scheme in which the sensing receiver determines, based on a bitmap, a CIR tap that needs to be fed back, or a feedback scheme in which the sensing receiver feeds back a CIR tap based on a customized pattern (or the sensing receiver determines, based on a customized pattern, a CIR tap that needs to be fed back).

When a value of the first parameter is a first value, it indicates that the CIR feedback scheme is feeding back the CIR tap based on the predefined feedback pattern. In this case, the receiver may determine, based on one or more predefined feedback patterns, the CIR tap that needs to be fed back. In other words, the CIR feedback scheme is the feedback scheme in which the sensing receiver feeds back the CIR tap based on the predefined feedback pattern. Each predefined feedback pattern may indicate one or more predefined groups of CIR taps that need to be fed back, and each group of CIR taps that need to be fed back may be referred to as a CIR group. For example, the first parameter is a bitmap mode field indicating that a plurality of CIR groups that need to be fed back are determined based on the predefined feedback pattern.

When the value of the first parameter is a second value, it indicates that the CIR feedback scheme is that the receiver determines, based on the bitmap, the CIR tap that needs to be fed back. In other words, the CIR feedback scheme is the feedback scheme in which the sensing receiver determines, based on the bitmap, the CIR tap that needs to be fed back. In this case, the sensing receiver determines, based on a CIR reference and a bitmap whose length is the CIR reference, the CIR tap that needs to be fed back.

In addition, when the value of the first parameter is a third value, it indicates that the CIR feedback scheme is that the sensing receiver feeds back the CIR tap based on the customized pattern. In other words, the CIR feedback scheme is that the sensing receiver feeds back the CIR tap based on the customized pattern. Therefore, the sensing receiver may determine the CIR tap that needs to be fed back.

In a possible example, the first parameter may be the bitmap mode field in Table 3, or may be carried in a bitmap mode information field. In this case, if a value of bitmap mode information is 0, it indicates that the sensing receiver feeds back the CIR tap based on the predefined feedback pattern. If the value of the bitmap mode information is 1, it indicates that the sensing receiver determines, based on the bitmap, the CIR tap that needs to be fed back. If the value of the bitmap mode information is 3, it indicates that the sensing receiver feeds back the CIR tap based on the customized pattern.

(2) Second parameter

The second parameter may also be referred to as a second field.

When the value of the first parameter is the first value, the second parameter may be used to determine a quantity of CIR taps that need to be fed back in each CIR group. The CIR group may be a CIR tap group or a CIR group including a plurality of consecutive CIR taps that need to be fed back in the feedback pattern. In this application, each feedback pattern may include one or more CIR groups, and each CIR group may include a plurality of consecutive CIR taps that need to be fed back. In addition, different CIR groups of each feedback pattern include a same quantity of CIR taps, and the quantity is indicated based on the second parameter.

In a possible implementation in which the quantity of CIR taps that need to be fed back in each CIR group is determined based on the second parameter, the second parameter may directly indicate the quantity of CIR taps that need to be fed back in each CIR group, that is, indicate the quantity of CIR taps that are included in each CIR group and that need to be fed back. In this case, a decimal value of the second parameter may be configured as a value of the quantity of taps, or may be configured as a numeric value corresponding to the quantity of taps.

Specifically, the second parameter may indicate a bitmap sub-window length (bitmap sub-window length), and the parameter represents the quantity of CIR taps that need to be fed back in each CIR group. In this application, a CIR group (or a block (clock)) may also be referred to as a CIR sub-window (sub-window).

For example, a quantity of CIR groups included in the feedback pattern is 2, and the quantity of CIR taps that need to be fed back in each CIR group is associated with the value of the second parameter. For example, when the value of the second parameter is 0, it indicates that the quantity of CIR taps in the CIR group is 16. When the value of the second parameter is 1, it indicates that the quantity of CIR taps in the CIR group is 32. When the value of the second parameter is 2, it indicates that the quantity of CIR taps in the CIR group is 64. When the value of the second parameter is 3, it indicates that the quantity of CIR taps in the CIR group is 128.

Optionally, the second parameter may be bit information whose length is n, where n is a positive integer, for example, n=2.

For example, when a maximum quantity of CIR groups of the feedback pattern is 256, Table 4 is used as an example. The second parameter may be a bitmap length field in a CIR report parameter. The bitmap length field is denoted

as $B_6B_5$, and $B_5$ and $B_6$ represent a respective bit value. A binary value of the $B_6B_5$ field or a decimal value corresponding to the $B_6B_5$ field may indicate the bitmap sub-window length, and the bitmap sub-window length is a value of the quantity of CIR taps that need to be fed back in each CIR group.

It may be understood that, in Table 4, a CIR sub-window 1 represents a 1st CIR group of the feedback pattern, a CIR sub-window 2 represents a 2nd CIR group of the feedback pattern, and the CIR sub-window 1 and the CIR sub-window 2 include a respective CIR tap that needs to be fed back. Optionally, a location of a start tap of the CIR sub-window 1 is variable, and is not limited to an index 1 shown in Table 4. For example, the start location of the CIR window may be changed by changing a value of a bitmap offset field, so that a 1st CIR tap that needs to be fed back is used as a 1st CIR tap of the CIR window.

Table 4

| Index of a feedback pattern | | Bitmap sub-window length | Bitmap gap value, represented as G | Index of a start tap of a CIR sub-window 1 | Index of an end tap of the CIR sub-window 1 | Index of a start tap of a CIR sub-window 2 | Index of an end tap of the CIR sub-window 2 |
|---|---|---|---|---|---|---|---|
| Bitmap length field ($B_6B_5$) | Bitmap gap field ($B_4B_3 \dots B_0$)) | | | | | | |
| 0 to 28 (00xxxxx) | | 16 | G={0, 8, ..., 224} | 1 | 16 | 17+G | 32+G |
| 29 to 31 (00xxxxx) | | Reserved | Reserved | Reserved | Reserved | Reserved | Reserved |
| 32 to 56 (01xxxxx) | | 32 | G={0, 8, ..., 192} | 1 | 32 | 33+G | 64+G |
| 57 to 63 (01xxxxx) | | Reserved | Reserved | Reserved | Reserved | Reserved | Reserved |
| 64 to 80 (10xxxxx) | | 64 | G={0, 8, ..., 128} | 1 | 64 | 65+G | 128+G |
| 81 to 95 (10xxxxx) | Reserved | Reserved | Reserved | Reserved | Reserved | Reserved | |
| 96 (11xxxxx) | 128 | G=0 | 1 | 128 | 129 | 256 | |
| 97 to 127 (11xxxxx) | Reserved | Reserved | Reserved | Reserved | Reserved | Reserved | |

As shown in Table 4, when the bitmap length field and the bitmap gap field include 7 bits, 0 to 127 may represent indexes of feedback patterns, that is, each index represents one of 128 predefined feedback patterns.

It can be learned that when values corresponding to the indexes of the feedback patterns are from 0 to 28, a binary value corresponding to the bitmap length field $B_6B_5$ is 00, and a decimal value is 0. In this case, a value of the bitmap sub-window length is 16, that is, a quantity of CIR taps in each CIR group is 16. In addition, in this case, a decimal value k corresponding to the bitmap gap field $B_4B_3 \dots B_0$ is an integer greater than or equal to 0 and less than or equal to 28. When the maximum quantity of CIR groups of the feedback pattern is 256, an index of the start tap that needs to be fed back and that is of the CIR sub-window 1 may range from 1 to 224.

In Table 4, an example in which the start tap of the CIR sub-window 1 in the specified feedback pattern is the CIR tap 1 is used. CIR taps of the CIR sub-window 1 in the specified feedback pattern are from the CIR tap 1 to the CIR tap 16, and CIR taps of the CIR sub-window 2 are from the CIR tap (17+G) to the CIR tap (32+G). G is determined based on k, for example, G=8*k.

For another example, when values corresponding to the indexes of the feedback patterns in Table 4 are from 32 to 56, a binary value corresponding to the bitmap length field $B_6B_5$ is 01, and a decimal value is 1. In this case, a value of the bitmap sub-window length is 32, that is, a quantity of CIR taps in each CIR group is 32. In addition, in this case, a decimal value k corresponding to the bitmap gap field $B_4B_3 \dots B_0$ is an integer greater than or equal to 0 and less than or equal to 24. In this case, an index of the start tap of the CIR sub-window 1 may range from 1 to 192.

In Table 4, an example in which the start tap of the CIR sub-window 1 in the specified feedback pattern is the CIR tap 1 is used. CIR taps of the CIR sub-window 1 in the specified feedback pattern are from the CIR tap 1 to the CIR tap 32, and CIR taps of the CIR sub-window 2 are from the CIR tap (33+G) to the CIR tap (64+G).

For another example, when values corresponding to the indexes of the feedback patterns in Table 4 are from 64 to 80, a binary value corresponding to the bitmap length field $B_6B_5$ is 10, and a decimal value is 2. In this case, a value of the bitmap sub-window length is 64, that is, a quantity of CIR taps in each CIR group is 64. In addition, in this case, a decimal value k corresponding to the bitmap gap field $B_4B_3...B_0$ is an integer greater than or equal to 0 and less than or equal to 16. In this case, an index of the start tap of the CIR sub-window 1 may range from 1 to 128.

In Table 4, an example in which the start tap of the CIR sub-window 1 in the specified feedback pattern is the CIR tap 1 is used. CIR taps of the CIR sub-window 1 in the specified feedback pattern are from the CIR tap 1 to the CIR tap 64, and CIR taps of the CIR sub-window 2 are from the CIR tap (65+G) to the CIR tap (128+G).

For another example, when a value corresponding to the index of the feedback pattern in Table 4 is 96, a binary value corresponding to the bitmap length field $B_6B_5$ is 11, and a decimal value is 3. In this case, a value of the bitmap sub-window length is 128, that is, a quantity of CIR taps in each CIR group is 64. In addition, in this case, a decimal value k corresponding to the bitmap gap field $B_4B_3...B_0$ is an integer greater than or equal to 0 and less than or equal to 16. In this case, an index of the start tap of the CIR sub-window 1 may be 1. To be specific, in this case, CIR taps of the CIR sub-window 1 in the feedback pattern are from the CIR tap 1 to the CIR tap 128, and CIR taps of the CIR sub-window 2 are from the CIR tap 129 to the CIR tap 256.

In addition, it may also be considered that a combination of the second parameter and the third parameter corresponds to the value of the bitmap sub-window length or the quantity of CIR taps that need to be fed back in each CIR group. Therefore, the quantity of CIR taps that need to be fed back in each CIR group may be determined based on the combination of the second parameter and the third parameter. For example, as shown in Table 4, when a decimal value of $B_6B_5B_4B_3... B_0$ is from 0 to 28, the quantity of CIR taps that need to be fed back in each CIR group is 16.

In a possible implementation in which the quantity of CIR taps that need to be fed back in each CIR group is determined based on the second parameter, the second parameter may indicate a length of a first bitmap or a length of a second CIR window. The length of the first bitmap and a quantity of CIR taps of gaps between a plurality of CIR groups of the feedback pattern may be used to determine the quantity of CIR taps that need to be fed back in each CIR group. For example, the second parameter is a bitmap length field shown in Table 3, and the field indicates the length of the first bitmap. In this case, a combination of the length of the first bitmap and the quantity of CIR taps of the gaps between the plurality of CIR groups indicates the quantity of CIR taps that need to be fed back in each CIR group.

Optionally, the quantity of CIR taps of the gaps between the plurality of CIR groups may be indicated based on the third parameter. Therefore, this implementation is described below with reference to the third parameter.

In a possible embodiment, when the value of the first parameter is the first value, the bitmap length field may be reused for the second field. In other words, when the value of the first parameter is the second value, the second field may indicate a length of a second bitmap or indicate the length of the second CIR window. The second bitmap may be used by the sensing receiver to determine, when the value of the first parameter is the second value, the CIR tap that needs to be fed back. For example, each bit in the second bitmap corresponds to one CIR tap, and indicates whether the CIR tap needs to be fed back.

Table 3 is used as an example. When the value of the bitmap mode field is 0, information indicated by the bitmap length field does not help much in determining the CIR tap that needs to be fed back. Therefore, the field may be configured as the second parameter to reuse the field. Therefore, no additional new field needs to be introduced to carry the second parameter, and configuration overheads and processing complexity can be reduced when the value of the first parameter is the first value.

It can be understood that, due to presence of the second parameter, the sensing receiver may obtain, based on the second parameter, the quantity of CIR taps that need to be fed back in each CIR group, and further determine, based on the quantity, the CIR tap that needs to be fed back in the CIR group, without indicating whether each CIR tap needs to be fed back. In this way, configuration overheads for feeding back the CIR tap can be reduced.

(3) Third parameter

The third parameter may also be referred to as a third field. The third parameter may indicate the quantity of CIR taps of the gaps between the plurality of CIR groups of the predefined feedback pattern. For example, the feedback pattern includes two CIR groups. A value of the third field may be used to determine a quantity of CIR taps of a gap between the two CIR groups. The quantity of CIR taps of the gap between the two CIR groups may be a quantity of CIR taps between an end tap of a 1st CIR group and a start tap of a 2nd CIR group.

The value of the third parameter meets a predefined relationship with the quantity of CIR taps of the gap between the CIR groups. For example, if a decimal value of the third parameter is k, the quantity G of CIR taps of the gap between the CIR groups satisfies: G=8*k, where k and G are both non-negative integers.

In an example, the third parameter may be the bitmap gap field. For example, the third parameter is the bitmap gap field shown in Table 3. Therefore, in this application, when the value of the first parameter is the first value, the field in which bitmap gap information is located may be reused, to indicate the CIR tap that needs to be fed back, thereby reducing the configuration overheads for feeding back the CIR.

As described above for the second parameter, when the value of the first parameter is the first value, the second parameter may indicate the length of the first bitmap, or indicate the length of the CIR window. In this case, the length of the first bitmap (or the length of the CIR window) may be combined with the quantity of CIR taps that are indicated by the third parameter and that are of the gaps between the plurality of CIR groups, to indicate the quantity of CIR taps that are included in each CIR group and that need to be fed back. For example, there is a correspondence between the quantity of CIR taps that are included in each CIR group and that need to be fed back, and the combination of the second parameter and the third parameter. Therefore, the sensing receiver may determine, based on the combination of the second parameter and the third parameter, the quantity of CIR taps that are included in each CIR group and that need to be fed back, to further send first CIR information based on the CIR tap that needs to be fed back in the feedback pattern.

It may be understood that, when the value of the first parameter is the first value, the second parameter indicates the quantity of CIR taps that need to be fed back in each CIR group, and in addition, the first information may further include the third parameter. It is assumed that a quantity of CIR groups of each predefined pattern is 2 by default. When the quantity of CIR taps included in the predefined pattern is known, the CIR tap that is included in each CIR group and that needs to be fed back may be determined based on the second parameter and the third parameter.

In a possible implementation, the CIR tap ($Len_{sub}$) that is included in each CIR group and that needs to be fed back satisfies:

$$Len_{sub} = 2^{\text{floor}(\log_2(Len-Gap))-1}$$

$Len_{sub}$ is the length of the first bitmap, that is, a CIR window length. *Gap* is the quantity of CIR taps of the gap between the two CIR groups. As described in this application, *Gap* may be determined based on the value k of the third parameter, for example, *Gap=8\*k.* floor() indicates an operation of rounding down. log indicates a logarithmic operation.

Optionally, the CIR tap that needs to be fed back in each CIR group may be determined based on $Len_{sub}$ and *Gap.* For example, if the start tap of the sub-window 1 is the CIR tap 1, the end tap of the sub-window 1 is a CIR tap $Len_{sub}$, the start tap of the sub-window 2 is a CIR tap ($Len_{sub}$ + *Gap),* and the start tap of the sub-window 2 is a CIR tap ($2Len_{sub}$ + *Gap -* 1).

In a possible example of the first information, when the first parameter is the bitmap mode field, the second parameter is the bitmap length field, and the third parameter is the bitmap gap field, the first information may be a CIR report parameters config field shown in Table 5.

Table 5

| Bit index | 0 and 1 | 2 and 3 | 4 and 5 | 6 | 7 | 8 | 9 to 18 | 19 to 23 | 4 to 64 octets (octets) |
|---|---|---|---|---|---|---|---|---|---|
| Information name | CIR I/Q number of bits | Bitmap length | Bitmap mode | Process CIR report for range | Process CIR report for velocity | Process CIR report for azimuth angle of arrival | Bitmap offset | Bitmap gap | Bitmap |

When the value of the bitmap mode is 0, the bitmap gap may be present, but the bitmap field may not be present. In this case, the bitmap length field may indicate the quantity of CIR taps that need to be fed back in each CIR group. Alternatively, the bitmap length field may indicate the length of the first bitmap, and the length of the first bitmap and a gap indicated by the bitmap gap field are used to determine the quantity of CIR taps that need to be fed back in each CIR group. In addition, when the value of the bitmap mode is 1, the bitmap gap may not be present, but the bitmap field may be present.

Based on Table 5, the bitmap field corresponds to a 2nd bit and a 3rd bit in the CIR report parameters config field, and the bitmap gap field may correspond to a 19th bit to a 23rd bit in the first information. Optionally, the bits $B_6B_5$ corresponding to the bitmap length field in Table 4 may alternatively be replaced with $B_2B_3$, indicating that the bitmap field is the 2nd bit and the 3rd bit in the CIR report parameters config field shown in Table 5. In addition, the bits $B_4B_3...B_0$ corresponding to the bitmap length field in Table 4 may alternatively be replaced with $B_{19}B_{20}...B_{23}$, indicating that the bitmap gap field is the 19th bit to the 23rd bit in the CIR report parameters config field shown in Table 5.

Optionally, based on S101 and S102, the sensing receiver may send the first CIR information, where the first CIR information includes the plurality of CIR groups. Correspondingly, the sensing transmitter may receive the first CIR information, and perform sensing based on the first CIR information.

According to the method shown in FIG. 4, the plurality of CIR groups that need to be fed back may be indicated based on the second parameter and the third parameter. The bitmap gap field may be reused for the third parameter to reduce indication overheads. In addition, the bitmap length field may be reused for the second parameter, to further reduce the indication overheads.

Based on a same concept, an embodiment of this application further provides a communication apparatus. The communication apparatus may include corresponding hardware structures and/or software modules for performing the functions shown in the foregoing methods. A person skilled in the art should be easily aware that, in combination with the units and the method steps in the examples described in embodiments disclosed in this application, this application can be implemented by using hardware or a combination of hardware and computer software. Whether a function is performed through hardware or hardware driven by computer software depends on particular application scenarios and design constraint conditions of the technical solutions.

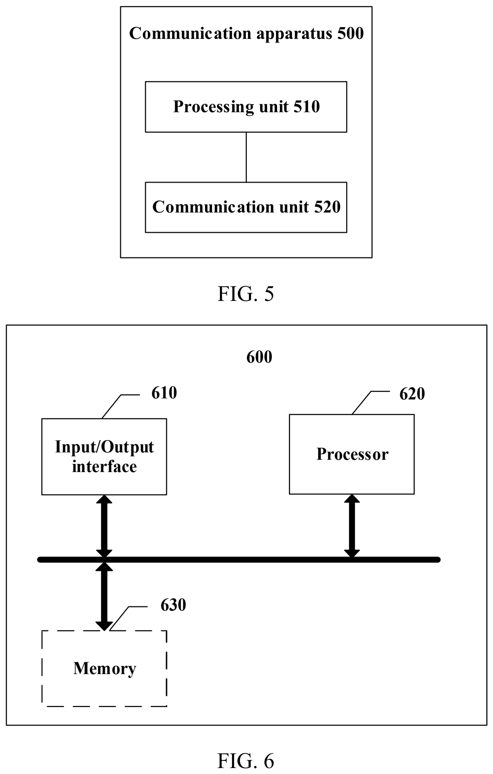

FIG. 5 to FIG. 7 are diagrams of structures of possible communication apparatuses according to embodiments of this application. The communication apparatuses may be configured to implement functions of the sensing transmitter and/or the sensing receiver in the foregoing method embodiments, and therefore can also achieve beneficial effect of the foregoing method embodiments. In a possible implementation, the communication apparatus may be the sensing transmitter and/or the sensing receiver. For related details and effect, refer to the descriptions in the foregoing embodiments.

As shown in FIG. 5, an apparatus 500 includes a processing unit 510 and a communication unit 520. The communication unit 520 may implement a corresponding communication function, and the processing unit 510 is configured to process data. The communication unit 520 may include a sending unit and/or a receiving unit. The communication unit 520 may alternatively be a transceiver unit, an input/output interface, or the like. The communication apparatus 500 may be configured to implement functions of the sensing transmitter and/or the sensing receiver in the method embodiment shown in FIG. 4.

For example, when the function of the sensing receiver is implemented, the communication unit 520 may be configured to receive first information. In addition, the communication unit 520 may be further configured to send first channel impulse response information.

For another example, when the function of the sensing transmitter is implemented, the communication unit 520 may be configured to send first information. In addition, the communication unit 520 may be further configured to receive first channel impulse response information.

For meanings of the foregoing technologies, refer to the descriptions in the method embodiments. Details are not described again.

It may be further understood that in embodiments of this application, division into modules is an example, and is merely logical function division. During actual implementation, there may be another division manner. In addition, functional modules in embodiments of this application may be integrated into one processor, each module may exist alone physically, or two or more modules may be integrated into one module. The integrated module may be implemented in a form of hardware, or may be implemented in a form of a software function module.

FIG. 6 shows a communication apparatus 600 according to an embodiment of this application. The communication apparatus 600 is configured to implement the communication method provided in this application. The communication apparatus 600 may be a communication apparatus to which the communication method is applied, a component in the communication apparatus, or an apparatus that can be used in a matching manner with the communication apparatus. The communication apparatus 600 may be a sensing transmitter and/or a sensing receiver. The communication apparatus 600 may be a chip system or a chip. In this embodiment of this application, the chip system may include a chip, or may include a chip and another discrete component. The communication apparatus 600 includes at least one processor 620, configured to implement the communication method provided in embodiments of this application. The communication apparatus 600 may further include an input/output interface 610, and the input/output interface may include an input interface and/or an output interface. In this embodiment of this application, the input/output interface 610 may be configured to communicate with another apparatus via a transmission medium, and a function of the input/output interface 610 may include sending and/or receiving. For example, when the communication apparatus 600 is the chip, the communication apparatus 600 performs transmission with another chip or device through the input/output interface 610. The processor 620 may be configured to implement the method shown in the foregoing method embodiments.

For example, the processor 620 may be configured to perform an action performed by the processing unit 510, and the input/output interface 610 may be configured to perform an action performed by the communication unit 520. Details are not described again.

Optionally, the communication apparatus 600 may further include at least one memory 630, configured to store program instructions and/or data. The memory 630 is coupled to the processor 620. The coupling in embodiments of this application may be indirect coupling or a communication connection between apparatuses, units, or modules in an electrical form, a mechanical form, or another form, and is used for information exchange between the apparatuses, the units, or the modules. The processor 620 may cooperate with the memory 630. The processor 620 may execute the program instructions stored in the memory 630. At least one of the at least one memory may be integrated with the processor.

In this embodiment of this application, the memory 630 may be a non-volatile memory, for example, a hard disk drive (hard disk drive, HDD) or a solid-state drive (solid-state drive, SSD), or may be a volatile memory (volatile memory) like a random access memory (random access memory, RAM). The memory is any other medium that can carry or store expected program code in a form of instructions or a data structure and that can be accessed by a computer, but is not limited thereto. The memory in this embodiment of this application may alternatively be a circuit or any other apparatus that can implement a storage function, and is configured to store the program instructions and/or the data.

In embodiments of this application, the processor 620 may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed in embodiments of this application may be directly performed by a hardware processor, or may be performed by using a combination of hardware and software modules in the processor.

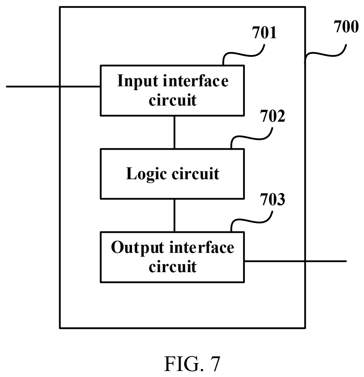

FIG. 7 shows a communication apparatus 700 according to an embodiment of this application. The communication apparatus 700 is configured to implement the communication method provided in this application. The communication apparatus 700 may be a communication apparatus to which the communication method shown in embodiments of this application is applied, a component in the communication apparatus, or an apparatus that can be used in a matching manner with the communication apparatus. The communication apparatus 700 may be a sensing transmitter and/or a sensing receiver. The communication apparatus 700 may be a chip system or a chip. In this embodiment of this application, the chip system may include a chip, or may include a chip and another discrete component. A part or all of the communication method provided in the foregoing embodiments may be implemented by hardware or software. When the communication method is implemented by hardware, the communication apparatus 700 may include an input interface circuit 701, a logic circuit 702, and an output interface circuit 703.

Optionally, an example in which the apparatus is configured to implement functions of a receiver is used. The input interface circuit 701 may be configured to perform a receiving action performed by the communication unit 520, the output interface circuit 703 may be configured to perform a sending action performed by the communication unit 520, and the logic circuit 702 may be configured to perform an action performed by the processing unit 510. Details are not described again.

Optionally, during specific implementation, the communication apparatus 700 may be a chip or an integrated circuit.

Some or all of operations and functions performed by the communication apparatus described in the foregoing method embodiments of this application may be implemented by using the chip or the integrated circuit.

An embodiment of this application provides a computer-readable storage medium storing a computer program. The computer program includes instructions for performing the foregoing method embodiments.

An embodiment of this application provides a computer program product including instructions. When the computer program product runs on a computer, the computer is enabled to perform the foregoing method embodiments.

An embodiment of this application provides a communication system, including a sensing transmitter and a sensing receiver, and is configured to implement the method shown in FIG. 4.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

All or some of foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a special-purpose computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, through a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, an SSD), or the like.

It should be noted that a part of this patent application document includes content protected by copyright. Except for making copies of patent documents of the Patent Office or recorded content of patent documents, the copyright owner reserves the copyright.

The communication apparatus in the foregoing apparatus embodiments corresponds to the sensing transmitter and/or the sensing receiver in the method embodiments, and corresponding modules or units perform corresponding steps. For example, the communication unit (transceiver) performs a receiving or sending step in the method embodiments, and a step other than the sending step and the receiving step may be performed by the processing unit (processor). For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, the components may be executed from various computer-readable media that store various data structures. For example, the components may communicate by using a local and/or remote process and based on a signal having one or more data packets (for example, data from two components interacting with another component in a local system, a distributed system, and/or across a network like the Internet interacting with another system by using the signal).

A person of ordinary skill in the art may be aware that, illustrative logical blocks (illustrative logical blocks) and steps (steps) described in combination with embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. When the functions are implemented in a form of software functional unit and sold or used as an independent product, the functions may be stored in a computer-readable storage medium.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   sending first information, wherein the first information comprises a first parameter and a second parameter, and the first parameter indicates a channel impulse response CIR feedback scheme, wherein
   when the first parameter is of a first value, the first parameter indicates that a receiver feeds back a CIR tap based on a predefined feedback pattern, and the second parameter indicates a quantity of CIR taps that need to be fed back in each CIR group of the predefined feedback pattern, or the second parameter indicates a length of a first bitmap, wherein the length of the first bitmap and a quantity of CIR taps of a gap between two CIR groups of the predefined feedback pattern are used to determine a quantity of CIR taps that need to be fed back in each CIR group.

2. The method according to claim 1, wherein when the first parameter is of a second value, the first parameter indicates that a CIR tap that needs to be fed back is determined based on a second bitmap, and the second parameter indicates a length of the second bitmap.

3. The method according to claim 1 or 2, wherein when a value of the first parameter is the first value, the first information further comprises a third parameter, and the third parameter indicates the quantity of CIR taps of the gap between the two CIR groups of the predefined feedback pattern.

4. The method according to any one of claims 1 to 3, wherein a CIR tap at a start location of a $1^{st}$ CIR group in the two CIR groups is variable.

5. The method according to claim 3 or 4, wherein when the value of the first parameter is the first value, a combination of the second parameter and the third parameter indicates an index of a specified predefined feedback pattern in the predefined feedback patterns.

6. The method according to any one of claims 3 to 5, wherein
a value of the second parameter is 0, a value of the third parameter is an integer greater than or equal to 0 and less than or equal to 28, and the quantity of CIR taps that need to be fed back in each CIR group is 16.

7. The method according to claim 6, wherein an index of the CIR tap at the start location of the $1^{st}$ CIR group in the two CIR groups is one of 1 to 224.

8. The method according to any one of claims 3 to 7, wherein
the value of the second parameter is 1, the value of the third parameter is an integer greater than or equal to 0 and less than or equal to 24, and the quantity of CIR taps that need to be fed back in each CIR group is 32.

9. The method according to claim 8, wherein the index of the CIR tap at the start location of the $1^{st}$ CIR group in the two CIR groups is one of 1 to 192.

10. The method according to any one of claims 3 to 9, wherein
the value of the second parameter is 2, the value of the third parameter is an integer greater than or equal to 0 and less than or equal to 16, and the quantity of CIR taps that need to be fed back in each CIR group is 64.

11. The method according to claim 10, wherein the index of the CIR tap at the start location of the $1^{st}$ CIR group in the two CIR groups is one of 1 to 128.

12. The method according to any one of claims 3 to 11, wherein
the value of the second parameter is 3, the value of the third parameter is 0, and the quantity of CIR taps that need to be fed back in each CIR group is 128.

13. The method according to claim 12, wherein the index of the CIR tap at the start location of the $1^{st}$ CIR group in the two CIR groups is 1.

14. A communication method, comprising:

receiving first information, wherein the first information comprises a first parameter and a second parameter, and the first parameter indicates a channel impulse response CIR feedback scheme, wherein
when the first parameter is of a first value, the first parameter indicates that a receiver feeds back a CIR tap based on a predefined feedback pattern, and the second parameter indicates a quantity of CIR taps that need to be fed back in each CIR group of the predefined feedback pattern, or the second parameter indicates a length of a first bitmap, wherein the length of the first bitmap and a quantity of CIR taps of a gap between two CIR groups of the predefined feedback pattern are used to determine a quantity of CIR taps that need to be fed back in each CIR group.

15. The method according to claim 14, wherein when the first parameter is of a second value, the first parameter indicates that a CIR tap that needs to be fed back is determined based on a second bitmap, and the second parameter indicates a length of the second bitmap.

16. The method according to claim 14 or 15, wherein when a value of the first parameter is the first value, the first information further comprises a third parameter, and the third parameter indicates the quantity of CIR taps of the gap between the two CIR groups of the predefined feedback pattern.

17. The method according to any one of claims 14 to 16, wherein a CIR tap at a start location of a 1st CIR group in the two CIR groups is variable.

18. The method according to claim 16 or 17, wherein when the value of the first parameter is the first value, a combination of the second parameter and the third parameter indicates an index of a specified predefined feedback pattern in the predefined feedback patterns.

19. The method according to any one of claims 16 to 18, wherein
a value of the second parameter is 0, a value of the third parameter is an integer greater than or equal to 0 and less than or equal to 28, and the quantity of CIR taps that need to be fed back in each CIR group is 16.

20. The method according to claim 19, wherein an index of the CIR tap at the start location of the 1st CIR group in the two CIR groups is one of 1 to 224.

21. The method according to any one of claims 16 to 20, wherein
the value of the second parameter is 1, the value of the third parameter is an integer greater than or equal to 0 and less than or equal to 24, and the quantity of CIR taps that need to be fed back in each CIR group is 32.

22. The method according to claim 21, wherein the index of the CIR tap at the start location of the 1st CIR group in the two CIR groups is one of 1 to 192.

23. The method according to any one of claims 16 to 22, wherein
the value of the second parameter is 2, the value of the third parameter is an integer greater than or equal to 0 and less than or equal to 16, and the quantity of CIR taps that need to be fed back in each CIR group is 64.

24. The method according to claim 23, wherein the index of the CIR tap at the start location of the 1st CIR group in the two CIR groups is one of 1 to 128.

25. The method according to any one of claims 16 to 24, wherein
the value of the second parameter is 3, the value of the third parameter is 0, and the quantity of CIR taps that need to be fed back in each CIR group is 128.

26. The method according to claim 25, wherein the index of the CIR tap at the start location of the 1st CIR group in the two CIR groups is 1.

27. A communication apparatus, comprising a processor, wherein the processor is configured to execute a computer program or instructions, to implement the method according to any one of claims 1 to 26.

28. The apparatus according to claim 27, further comprising a memory and/or a transceiver, wherein the memory is configured to store the computer program or the instructions, and the transceiver is used by the apparatus to perform communication.

29. A computer-readable storage medium, wherein the storage medium stores a computer program or instructions, and when the computer program or the instructions are executed by a communication apparatus, the method according to any one of claims 1 to 26 is implemented.

**PAN coordinator or coordinator**

FIG. 1

**PAN coordinator or coordinator**

FIG. 2

FIG. 3

FIG. 4

Communication apparatus 500

Processing unit 510

Communication unit 520

FIG. 5

600

610

Input/Output
interface

620

Processor

630

Memory

FIG. 6

**701**

**700**

Input interface
circuit

**702**

Logic circuit

**703**

Output interface
circuit

FIG. 7

## INTERNATIONAL SEARCH REPORT

| International application No. |
|---|
| **PCT/CN2024/102474** |

**A. CLASSIFICATION OF SUBJECT MATTER**

H04B1/7163(2011.01)i

According to International Patent Classification (IPC) or to both national classification and IPC

**B. FIELDS SEARCHED**

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, VEN, WPABS, WPABSC, CNKI: 参数, 反馈, 方案, 分支, 个数, 模板, 数量, 信道冲击响应, 预设, CIR, parameter, feedback, number, branch?, plan, default

**C. DOCUMENTS CONSIDERED TO BE RELEVANT**

| Category* | Citation of document, with indication, where appropriate, of the relevant passages | Relevant to claim No. |
|---|---|---|
| A | CN 111886911 A (GUANGDONG OPPO MOBILE COMMUNICATIONS CO., LTD.) 03 November 2020 (2020-11-03) abstract, and claims 1-21 | 1-29 |
| A | CN 115474209 A (HUAWEI TECHNOLOGIES CO., LTD.) 13 December 2022 (2022-12-13) entire document | 1-29 |
| A | US 2016087769 A1 (ALCATEL LUCENT) 24 March 2016 (2016-03-24) entire document | 1-29 |

☐ Further documents are listed in the continuation of Box C.  ☑ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **11 September 2024** | **12 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2024/102474**

| Patent document cited in search report | | | Publication date (day/month/year) | Patent family member(s) | | | Publication date (day/month/year) |
|---|---|---|---|---|---|---|---|
| CN | 111886911 | A | 03 November 2020 | None | | | |
| CN | 115474209 | A | 13 December 2022 | None | | | |
| US | 2016087769 | A1 | 24 March 2016 | KR | 20150144329 | A | 24 December 2015 |
| | | | | KR | 101768355 | B1 | 30 August 2017 |
| | | | | EP | 2804329 | A1 | 19 November 2014 |
| | | | | JP | 2016524382 | A | 12 August 2016 |
| | | | | JP | 6203944 | B2 | 27 September 2017 |
| | | | | US | 9923685 | B2 | 20 March 2018 |
| | | | | WO | 2014183911 | A1 | 20 November 2014 |
| | | | | TW | 201445913 | A | 01 December 2014 |
| | | | | TWI | 549444 | B | 11 September 2016 |

Form PCT/ISA/210 (patent family annex) (July 2022)

**REFERENCES CITED IN THE DESCRIPTION**

**Patent documents cited in the description**

- CN 202310842664